# EUROPEAN PATENT SPECIFICATION

(11) **EP 1 245 547 B1**
(45) Date of publication and mention of the grant of the patent: **29.06.2005**
(21) Application number: 02002958.3
(22) Date of filing: 11.02.2002
(51) Int. Cl.: C04B 28/02, C04B 32/02, E04G 23/02

(54) **Cement mortar, structure and method for reinforcing building components**
Zementmörtel, Struktur und Verfahren zur Verstärkung von Bauwerkteilen
Mortier au ciment, structure et procédé pour renforcer des éléments de construction

(30) Priority: 29.03.2001 IT MI010665
(43) Date of publication of application: 02.10.2002
(73) Proprietor: Ruredil S.p.A., 20122 Milano (IT)
(72) Inventor: Mantegazza, Giovanni, 20122 Milano (MI) (IT); Gatti, Alessandra, 20122 Milano (MI) (IT)
(74) Representative: Frignoli, Luigi

(56) References cited:
- BE-A- 404 951
- DE-A- 19 525 508
- NL-C- 83 962
- DATABASE WPI Week 199808 Derwent Publications Ltd., London, GB; AN 1998-083658 XP002171342 & JP 09 317199 A (INAX KK, ET AL.)
- DATABASE WPI Week 199804 Derwent Publications Ltd., London, GB; AN 1998-035777 XP002171343 & JP 09 249439 A (KAJIMA CORP)
- DATABASE WPI Week 199831 Derwent Publications Ltd., London, GB; AN 1998-357288 XP002205602 & JP 10 139516 A (MITSUBISHI MATERIALS)

## Description

The present invention relates to cement mortar in solid powder form, a structure and a method for reinforcing pre-existing building components.

The term "building components" means all those building components constructed of masonry, plain concrete or reinforced concrete, considered individually or in combination. During the passage of time, many of these components undergo considerable degradation due to environmental aggression (either natural or consequent on human activity), or caused by poor manufacture of such components or unsuitable choice of materials: finally, but not exhaustively, seismic events can also cause degradation.

The invention hence relates to the method, to the materials and to the structures for repairing or reinforcing pre-existing building components and adapting them to satisfy the requirements of law.

Numerous systems currently exist for enhancing building components, however these systems present all the defects and problems briefly stated hereinafter.

One of the traditional methods for repairing and reinforcing building components which have undergone damage due to a seismic event or which require static mechanical improvement (typically those masonry structures designed some centuries ago, and now used for other purposes), is to apply electro-welded steel netting to wrap the structure. The purpose of such intervention is to increase the ductility of the structural elements (paving, columns, beams, facewalls, arches and vaults).

The drawbacks consequent on the use of this technique are essentially two in number, namely:
a) the difficulty of installing electro-welded netting because of its weight and its limited manageability: in this respect, several operators and sometimes special equipment are required to correctly position the netting;
b) metal netting undergoes corrosion, so that in the long term, in aggressive environments, the metal reinforcement can deteriorate due to rust.

A new reinforcement system for concrete and masonry has recently been introduced based on the use of bands of carbon (or other fibre) fabrics known as fibre reinforced polymer (F.R.P.). These bands are applied using a thermoplastic resin (usually epoxy) which ensures adhesion between the concrete (or masonry) and the bands of synthetic material (carbon, aramid or other fibres). These systems also present drawbacks, namely:
a) epoxy resins with a maximum operating temperature of 80°C are used. Consequently in the case of fire, the F.R.P. reinforcement degrades rapidly as the resin which maintains the bands of synthetic material bound to the concrete or masonry structure loses its chemical, physical and mechanical properties, resulting in fibre detachment and prejudicing the restoration work;
b) a further drawback is the harmful nature of these resins both to the operator and to the environment: in this respect, they are used as catalysts for secondary and tertiary amines which are normally toxic/harmful products, some of them even being potentially cancerogenic products;
c) a further drawback relates to the application of these consolidation systems to masonry structures. The application of an epoxy resin which, by definition, is a closed-pore polymer, means that the masonry cannot undergo thermo-hygrometric transfer with the outside: this means that the moisture present in the masonry cannot freely escape and migrate towards the outside;
d) lastly, but not exhaustively, the costs of these reinforcement works are very high by virtue of the high cost of epoxy resins and synthetic fibre bands.

Further prior art is represented by the DE-A-19525508 which discloses strengthening a component of steel - reinforced concrete or brickwork by: firstly applying a mineral matrix in the form of a cement mortar layer onto at least one component surface; secondly pressing a textile mesh reinforcement into the upset matrix such that the mortar penetrates the meshes of the reinforcement; and then applying a further cement mortar layer of the same mineral matrix as used in the first step.

The method disclosed in the German patent is very interesting but it cannot have a practical use because it requires the use of a matrix which is formed by a mixture of cements, fillers and a dispersion into water of styrol/acrylate as a preferred binding component.

The presence of the dispersion into water of styrol/acrylate in the matrix mixture attributes a physical character of increased fluidity ,to such mixture (which, therefore, has not the setting behaviour that the mixtures obtained only from common powdered or solid cements have) and has, as a consequence, two unacceptable drawbacks, one of which consists in the fact that if and when the cement mortar layer comprising the binding component is applied on a vertical surface of a building structure to be reinforced it tends to run downwardly before the mortar sets: and that the presence of the styrol/acrylate dispersion will surely degradate the dried cement matrix layer causing the formation of fissures and/or of crumbling in it.

Indeed it is well known that the mechanical resistance of a cement mortar is strongly influenced by the water/cement ratio: the higher is such ratio, the lower will be the mechanical resistance of the cement mortar and the higher will be the formation of cracks and/or the crumbling consequent to the volume changes.

The main object of the present invention is to provide a structural reinforcement structure for pre-existing building work (components of any form constructed of plain concrete, reinforced concrete or masonry) which is of simple and rapid implementation, enables normal thermo-hygrometric transfer between the outside and the inside of these components to take place, has the same fire resistance as reinforced concrete or masonry components, and uses resistant netting of a type such as not to undergo degradation phenomena in any type of chemical/aggressive environment: this netting is also less costly than the bands of synthetic fibres used in the known art.

Another object of this invention is to provide a cement mortar which is in powder form and does not contain water at all (water must be obviously added to the cement mixture just before the mortar has to be used), while it contains fluidifying and thixotropic additives which enable to add a lower amount of water to the mortar at the time of its use (thus increasing the mechanical resistance of the set cement layer), make the distribution of the cement mortar layer easier, prevent the unset layer from running down if and when it is applied on a vertical wall, and prevent or strongly reduce the formation of cracks and/or of crumbles in the set cement layer.

This and further objects are attained by a cement mortar for forming structures incorporating synthetic fibre netting for reinforcing building components, comprising a mixture of components in powder form comprising between 5% and 95% of cement, between 10% and 70% of fine inert mineral fillers having a particle size less than 700 micron, characterized in that it also comprises chemical additives which in themselves comprise between 0.1% and 25% of unsaturated copolymer resins, between 0.05% and 2.5% of fluidifying additives and between 0.005% and 1% of thixotropic additives pertaining to the cellulose class, all the aforesaid percentages being by weight and referred to the total weight of the cement mortar.

Cements which can be used are Portland cement, composite Portland cement, blast-furnace cement, pozzolana cement, composite cement and respective sub-types: pozzolana or composite cements are preferred. Their proportions vary between 5% and 95% by weight, with preference for proportions between 20% and 70% by weight.

The mineral fillers have a maximum particle size of 700 micron; they can be of quartziferous, siliceous, calcareous, arenaceous or granitic nature, or be by-products of other processes such as silica flour or fly ash. Mixtures of said fillers are preferably used.

The mixture proportions vary between 10% and 70% by weight.

The chemical additives used in the mortar formulation can be classified according to the chemical nature and/or performance. Some of these are essential in order to make the cement mortar binding, whereas others are preferred but not essential.

Those additives the presence of which in the mortar is essential are the following:
1. Polymer resins in powder form pertaining to the unsaturated copolymer class, such as styrene/butadiene, vinylacetate/ethylene, styrene/divinylbenzene, styrene/acrylic copolymers etc. The proportions to be used vary between 0.1% and 25% by weight; values between 1% and 17% by weight are preferred.
2. Superfluidifying and fluidifying additives preferably pertaining to the class of polymers based on polycondensed lignin, betanaphthalene or melamine-formaldehyde sulphonates (LS, NFS or MS), or based on modified polyacrylate chains (ACR). The proportion varies between 0.05% and 2.5% by weight.
3. Thixotropic additives pertaining to the cellulose class, such as methylcellulose, methylhydroxyethylcellulose, methylhydroxy-propylcellulose, hydroxyethylcellulose, hydroxypropylcellulose, carboxymethylcellulose, carboxymethylhydroxyethylcellulose. Methylcellulose and its derivatives are preferred.

The proportions to be used vary from 0;005% to 1% by weight; practical experiments indicate that the best results are obtained with proportions between 0.15% and 0.65 % by weight

Those additives the presence of which is preferable but non essential are:
1. Anionic, cationic, non-ionic or amphoteric aerating additives, such as quaternary ammonium salts, mixed salts of laurylsulphonic acid, fluorophenylborates, nonylphenyl with various degrees of ethoxylation, etc. Laurylsulphonic acid derivatives are preferred: proportions vary from 0.01% to 1.5% by weight.
2. Additives for counteracting shrinkage both in the plastic state and in the hardened state, consisting of mixtures of sulphaluminates and oxides. The proportions to be used are between 0.1% and 10% by weight, proportions between 0.3% and 5% by weight being preferred.

All the above specified percentages are by weight on the total weight of the cement mortar of which the various additives form part.

The invention also relates to a method for reinforcing building components, the method comprising preparing a layer of cement mortar as defined above, this mortar being mixed with water and then being applied onto the surface of the building component to be reinforced and incorporating one or more nets made of one or more synthetic fibres suitable fibres for the nets consist of carbon fibre, aramid fibre, glass fibre, polyester fibre, polyethylene or other fibre, or mixtures thereof, in which case the mixture ratios vary between 10-90% and 90-10% by weight, mixtures consisting of 50%-50% by weight being preferred.

From the geometrical profile, the aforesaid netting has a square mesh of dimensions between 10mm and 35mm: values of 11mm, 26mm or 35mm are preferred, its task being to improve or adapt the structure to which it is applied.

The weight percentage distribution of the synthetic fibre in the two weft and warp directions varies between 20-80 and 80-20; practical experiments indicate that the ratios 24-76, 55-45 and 78-22 provide best results with regard to structural reinforcement.

To clarify the method of forming the mortar and the reinforcement structure for building components, some embodiments thereof will now be described by way of non-limiting example.

### EXAMPLE 1

### Preparation of the cement mortar

22.8% of pozzolana cement, 8.35% of copolymer resin, 0.03% of methylhydroxyethylcellulose, 37.27% of fine quartz with a maximum particle size of 500 micron, and 31.55% of fly ash, the percentages being by weight on the total mortar weight, are mixed intimately together.

### EXAMPLE 2

### Preparation of the cement mortar

In a manner similar to Example 1, composite cement (53.25%), copolymer resin (1.95%), methylcellulose (0.20%), fine quartz with a maximum particle size of 350 micron (20.80%), powdered marble with a maximum particle size of 41 micron (13.50%), silica flour (6.50%), ACR (0.05%), laurylsulphate ether (0.80%) and anti-shrinkage additive (2.95%) are intimately mixed together.

### EXAMPLE 3

### Preparation of the cement mortar

Blast-furnace cement (64.00%), copolymer resin (16.75%), methylcellulose (0.60%), quartz with a maximum particle size of 500 micron (20.80%), marble with a maximum particle size of 51 micron (13.50%), fly ash (4.75%) and NFS (2.00%) are intimately mixed together.

The cement mortar described in Examples 1 to 3 consists in an intimate mixture of components in powder form.

### EXAMPLE 4

### Formation of reinforcement structures for building components

The building components to be reinforced can be of any kind, i.e. constructed of masonry, plain concrete, reinforced concrete, or a combination of these materials.

The surface of the component to be reinforced (for example the extrados of a masonry vault, the surface of a reinforced column or of a plain concrete pillar, the surface of a masonry wall) is carefully cleaned by removing the incoherent material and possibly making the surface uniform with mortar. This surface must then be wetted and a sufficiently thick layer (for example of about 5 mm thickness) of the cement mortar of the present invention be applied to it, after which one or more layers of synthetic material netting are spread over it (if more than one layer of netting is used, the meshes of one net are superposed on but offset from those of the closest adjacent net, with a layer of cement mortar being interposed between these nets), the net is pressed onto the mortar layer until it becomes embedded in the mortar, then finally the outer surface is made uniform by applying a very thin (about 1 mm) layer of further cement mortar.

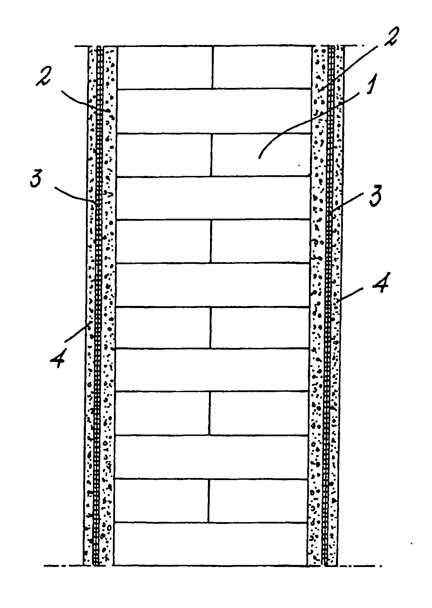

In the accompanying drawing, the only figure represents a portion of masonry 1, on the surface to be reinforced of which there is applied a first layer 2 of cement mortar into which a synthetic fibre netting 3 is embedded, on which there is then applied a thin second layer 4 of cement mortar of the invention.

Tests carried out have demonstrated that the described structures are very effective in reinforcing the building components to which they are applied, they enable normal thermo-hygrometric transfer between the outside and inside of the masonry to take place, they have the same fire resistance as reinforced cement structures and masonry, and do not undergo degradation phenomena in any type of aggressive chemical environment.

## Claims

1. Cement mortar for forming structures incorporating synthetic fibre netting for reinforcing building components, comprising a mixture of components in powder form comprising between 5% and 95% of cement, between 10% and 70% of fine inert mineral fillers having a particle size less than 700 micron, **characterized in that** it also comprises chemical additives which in themselves comprise between 0.1% and 25% of unsaturated copolymer resins, between 0.05% and 2.5% of fluidifying additives and between 0.005% and 1% of thixotropic additives pertaining to the cellulose class, all the aforesaid percentages being by weight and referred to the total weight of the cement mortar.

2. Cement mortar as claimed in claim 1, **characterised in that** said fluidifying additives are chosen from the group consisting of polymers based on polycondensed lignin, betanaphthalene or melamine-formaldehyde sulphonates, and polymers based on modified polyacrylate chains.

3. A method for reinforcing building components, **characterised by** applying onto the surface of the building component a layer of a mixture of water and of cement mortar in accordance with claims 1 and 2, such layer incorporating at least one net formed of at least one synthetic fibre.

## Patentansprüche

1. Zementmörtel zur Bildung von Strukturen, die ein Geflecht aus Synthesefasern enthalten, zur Verstärkung von Baukomponenten, umfassend ein Gemisch aus Komponenten in Pulverform, umfassend zwischen 5% und 95% Zement, zwischen 10% und 70% feiner inerter mineralischer Füllstoffe mit einer Partikelgröße unter 700 Mikrometern, **dadurch gekennzeichnet, dass** er auch chemische Additive umfasst, die selbst zwischen 0,1% und 25% ungesättigter Copolymerharze, zwischen 0,05% und 2,5% verflüssigender Additive und zwischen 0,005% und 1% thixotroper Additive, die zur Celluloseklasse gehören, umfassen, wobei alle zuvor genannten Prozentangaben Gewichtsprozent sind und sich auf das Gesamtgewicht des Zementmörtels beziehen.

2. Zementmörtel nach Anspruch 1, **dadurch gekennzeichnet, dass** die verflüssigenden Additive ausgewählt sind aus der Gruppe, bestehend aus Polymeren auf Basis von polykondensiertem Lignin, Betanaphthalin oder MelaminFormaldehyd-Sulfonaten und Polymeren auf Basis modifizierter Polyacrylatketten.

3. Verfahren zur Verstärkung von Baukomponenten, **dadurch gekennzeichnet, dass** auf die Oberfläche der Baukomponente eine Schicht eines Gemisches aus Wasser und Zementmörtel nach den Ansprüchen 1 und 2 aufgebracht wird, wobei eine derartige Schicht mindestens ein Geflecht enthält, das aus mindestens einer Synthesefaser gebildet worden ist.

## Revendications

1. Mortier au ciment pour former des structures incorporant des maillages en fibres synthétiques pour renforcer des éléments de construction, comprenant un mélange de composants sous forme de poudre contenant entre 5% et 95% de ciment, entre 10% et 70% de charges minérales fines inertes ayant une taille de particules inférieure à 700 microns, **caractérisé en ce qu'**il contient également des additifs chimiques qui contiennent en eux-mêmes entre 0,1% et 25% de résines copolymères insaturées, entre 0,05% et 2,5% d'additifs fluidifiants et entre 0,005% et 1% d'additifs thixotropes, appartenant à la classe des celluloses, tous les pourcentages susmentionnés s'entendant en poids et étant calculés en rapport du poids total du mortier au ciment.

2. Mortier au ciment selon la revendication 1, **caractérisé en ce que** lesdits additifs fluidifiants sont choisis dans le groupe comprenant des polymères à base de sulfonates de lignine polycondensée, de bétanaphthalène ou de mélamine-formaldéhyde, et des polymères basés sur des chaînes de polyacrylate modifiées.

3. Procédé pour renforcer des éléments de construction, **caractérisé par** l'application, sur la surface de l'élément de construction, d'une couche faite d'un mélange d'eau et de mortier au ciment selon les revendications 1 et 2, une telle couche comprenant au moins un maillage formé d'au moins une fibre synthétique.
